# FASCICULE DE BREVET EUROPEEN

(11) **EP 1 579 773 B1**
(45) Date de publication et mention de la délivrance du brevet: **18.10.2006**
(21) Numéro de dépôt: 03778354.5
(22) Date de dépôt: 05.12.2003
(51) Int. Cl.: A23L 1/325

(54) **PRODUIT ALIMENTAIRE SEMBLABLE A L'ANCHOIS ET SON PROCEDE DE FABRICATION**
SARDELLENÄHNLICHES LEBENSMITTELPRODUKT UND HERSTELLUNGSVERFAHREN DAFÜR
FOOD PRODUCT SIMILAR TO ANCHOVY AND PRODUCTION METHOD THEREOF

(30) Priorité: 10.12.2002 ES 200202822
(43) Date de publication de la demande: 28.09.2005
(73) Titulaire: Conservas Fredo S.A., 39770 Laredo (ES)
(72) Inventeur: NASARI ILENGO, Roberto, Asti (IT)
(74) Mandataire: Intes, Didier Gérard André
(86) Numéro de dépôt international: PCT/ES2003/000621
(87) Numéro de publication internationale: WO 2004/052124

(56) Documents cités:
- EP-A1- 0 979 616
- ES-A1- 2 047 443
- ES-A1- 2 162 610
- ES-A1- 2 165 805

## Description

L'anchois, poisson de l'ordre des *malacoptérygiens abdominaux,* fait l'objet de différentes formes de préparation pour la consommation humaine. Une des formes les plus connues est celle dénommée filets d'anchois, dans laquelle l'anchois est mis en saumure, en obtenant ensuite des filets qui sont mis en conserve dans de l'huile.

La grande consommation de l'anchois et la réduction du nombre de captures de l'anchois a élevé sensiblement son coût, l'objet de la présente invention est un produit alimentaire analogue à l'anchois qui permet de réduire ses coûts, de réduire la pression des captures sur l'anchois naturelle et d'obtenir en outre, un produit offrant des conditions même meilleures que celles du propre anchois lorsqu'on utilise dans des produits alimentaires soumis à la chaleur, tels que les pizzas, les plats pré-cuisinés, etc. La présente invention a aussi pour objet le procédé de fabrication dudit produit.

### Antécédents de l'invention

On connaît déjà, depuis des années, la fabrication de produits analogues à des poissons ou fruits de mer naturels à partir de l'utilisation de surimi, en identifiant avec le terme *surimi,* un produit obtenu à partir de muscle de poisson, généralement d'espèces pélagiques de moindre acceptation pour la consommation humaine. Ce muscle de poisson est haché, lavé et égoutté, en lui ajoutant ensuite les additifs et ingrédients correspondants.

Dans ce sens et comme exemple des multiples antécédents existants on peut citer les Brevets des Etats Unis US 439634 et 4579741.

Le Brevet US 4396634 demandé par « General Foods » en 1982 décrit un analogue de crevette, tandis que le Brevet US 4579741 de « General Mills » décrit la fabrication d'un fruit de mer, en particulier, un analogue de crevette, obtenu à partir de surimi.

Le Brevet d'invention espagnol, dont le numéro de demande est 8901508, appartenant à la société « Angulas Aguinaga, S.A. » a pour objet un procédé de fabrication d'un produit analogue à la civelle, dans lequel on utilise du surimi mélangé à d'autres ingrédients.

Dans ce Brevet est décrit un procédé qui est défini par une première phase de mélange et de hachage, à une température ne devant pas être supérieure à 15ºC, et une seconde phase d'homogénéisation entre 0ºC et 15ºC, pour passer ensuite à la mise en forme du produit par moulage ou par extrusion.

La même Société, titulaire du Brevet espagnol numéro 8901508, est aussi titulaire du Brevet d'invention espagnol dont le numéro de demande est 8904085. Ce Brevet décrit un produit alimentaire et son procédé de fabrication à partir de l'utilisation du surimi.

Après ces Brevets, il existe d'autres antécédents dans l'état de la technique qui décrivent même des produits analogues à l'anchois, obtenus également à partir de l'emploi du surimi.

C'est bien le cas, par exemple, des Brevets d'invention dont les numéros de demande sont 9200761 et 200001453, les deux appartenant au « Consejo Superior de Investigaciones Cientificas » et le Brevet d'Invention demandé sous le numéro 200001231, appartenant à « Tecpa ».

### Objet de l'invention

L'objet de la présente invention est un produit analogue à l'anchois et son procédé de fabrication, ce produit présentant les caractéristiques suivantes :
- Un produit avec une texture, couleur, odeur et goût très proches du produit naturel.
- Un produit supportant une forte stérilisation finale permettant une longue durée de conservation.

### Brève description des dessins

La figure 1 montre, selon une vue à l'échelle 1 : 1 et en plan un exemple du produit objet de la présente invention conformé sous forme de filet (1) d'anchois.
La figure 2 montre, agrandi à une échelle 5 : 1, le détail indiqué sur la figure 1.
La figure 3 est la section transversale III-III indiquée à la figure 1, agrandie à une échelle 5 : 1.

### Description du mode de réalisation préféré

L'objet de la présente invention est un produit analogue au filet d'anchois ; produit obtenu à partir de l'emploi du dénommé surimi.

La composition de ce produit analogue aux filets d'anchois est la suivante :
- surimi-base
- pulpe d'anchois
- eau
- colorants
- concentré protéique
- fibre végétale
- amidon de manioc,
- blanc d'oeuf,
- sel,
- agent texturant/gélifiant
- fécule de pomme de terre

En ce qui concerne le surimi, bien que l'utilisation d'autres surimis soit possible, celui utilisé, en tant qu'exemple non limitatif de réalisation pratique, est un surimi à base de « grondin » aussi connu comme « poisson blond », « volant » ou « faux volant » et dont le nom scientifique est celui de « *Prionotus stephanophrys* ».

La pulpe d'anchois est obtenue, indifféremment, à partir des filets naturels d'anchois, ou de l'anchois salé.

Pour ce qui concerne les colorants on a utilisé les suivants : colorant organique en poudre « rouge-fraise » ; colorant alimentaire liquide hydrosoluble « proticolor-saumon » et colorant organique en poudre « caramel ».

Le concentré protéique est un concentré protéique séreux, qui est 100% d'origine laitière avec 80% de protéines pour obtenir un enrichissement protéique.

La fibre végétale est une fibre fonctionnelle dont la mission est d'améliorer la texture et de conférer une stabilité au produit. Cette fibre végétale est composée fondamentalement d'amidon et de fibres alimentaires et elle est exempte de matières grasses.

L'amidon de manioc utilisé est un amidon extrait par voie humide de tubercules de l'espèce « *manihot utilisima pohl* », tel que celui identifié sous la dénomination « fécule de manioc ».

Le blanc d'oeuf est utilisé dans sa présentation en poudre et le sel est du sel commun utilisé dans le secteur alimentaire.

En ce qui concerne l'agent texturant, on utilise comme tel la farine de graines de caroube, en association avec une carragheen gélifiante.

Pour finir, la fécule de pomme de terre utilisée est une fécule de pomme de terre modifiée, soluble à froid, qui se présente en poudre.

Il est évident que les caractéristiques générales indiquées par rapport aux différents ingrédients, le sont à titre d'exemple de réalisation pratique, mais qu'en aucun cas elles ne peuvent être comprises de manière limitative, ces caractéristiques pouvant varier, pourvu qu'il s'agisse d'un même produit ou d'un produit analogue accomplissant une même fonction.

La formule quantitative du produit, avec ses pourcentages en poids est :

| | % en poids |
|---|---|
| - Surimi-base | 23,00% |
| - Pulpe d'anchois | 35,00% |
| - Eau | 20,00% |
| - Colorants | 2,95% |
| - Concentré protéique | 1,00% |
| - Fibre végétale | 8,75% |
| - Amidon de manioc | 3,00% |
| - Blanc d'oeuf en poudre | 2,00% |
| - Sel | 1,50% |
| - Agent texturant/gélifiant | 0,80% |
| - Fécule de pomme de terre | 2,00% |
| | 100,00% |

La quantité de surimi-base peut être comprise entre 20% et 25% de pourcentage en poids, bien que de préférence elle sera de 23%. De la même manière, le pourcentage en poids de la pulpe d'anchois peut être compris entre 30% et 40 %, bien que, de préférence, il sera de 35%.

Le procédé de fabrication de ce produit se déroule de la manière suivante :

En premier lieu, on prépare le surimi-base, en partant du poisson entier et on lui enlève les viscères, on le décapite et on el pèle pour, par la suite, le laver dans l'eau.

Ensuite et avec un séparateur mécanique on lui extrait la chair, en séparant les arêtes et on conforme une pulpe de laquelle on élimine les protéines sarcoplasmiques et les matières grasses, avec trois procédés de lavage et trois de séchage. La pulpe lavée a 92-95% d'eau.

Ensuite on procède à un affinage de la pulpe, en éliminant de la pulpe les collagènes. La pulpe affinée est pressée, pour éliminer l'eau résiduaire et on ajoute ensuite des cryoprotecteurs, tels que le sucre, le sorbitol et les polyphosphates.

Le surimi-base étant ainsi préparé est conditionné en blocs qui peuvent être conservés en congélation jusqu'à leur utilisation.

En partant d'un bloc de ce surimi-base, on divise en morceaux le bloc, en procédant au pesage des quantités correspondantes de surimi et des autres ingrédients.

Ensuite on introduit les morceaux de surimi et le reste d'ingrédients, sauf le sel et l'agent texturant/gélifiant dans une machine coupeuse-mélangeuse, en réalisant un procédé de tranchage et de mélangeage pendant trente secondes (30 s) à une vitesse réduite, telle que mille cinq cent tours par minute (1500 t.p.m.).

Ensuite on passe à une vitesse élevée en atteignant les trois mille tours par minute (3000 t.p.m.) jusqu'à atteindre une température de zéro degrés centigrades (0ºC).

À ce point, on ajoute le sel et l'agent texturant/gélifiant, c'est-à-dire la farine de graine de caroube et la carragheen et on maintient la machine coupeuse-mélangeuse à vitesse élevée (3000 t.p.m.), jusqu'à obtenir une émulsion appropriée à une température de finition inférieure à cinq degrés centigrades (5ºC).

Le produit ne doit pas dépasser 5ºC comme température maximale, il devra même se maintenir le plus éloigné possible de celle-ci, car si on atteint cette température maximale ou si on la dépasse, on nuit à la qualité du moulage/mise en forme et à l'extraction du produit déjà conformé, ce qui oblige en outre à réaliser un nettoyage total et exhaustif des moules à la fin de chaque procédé de moulage.

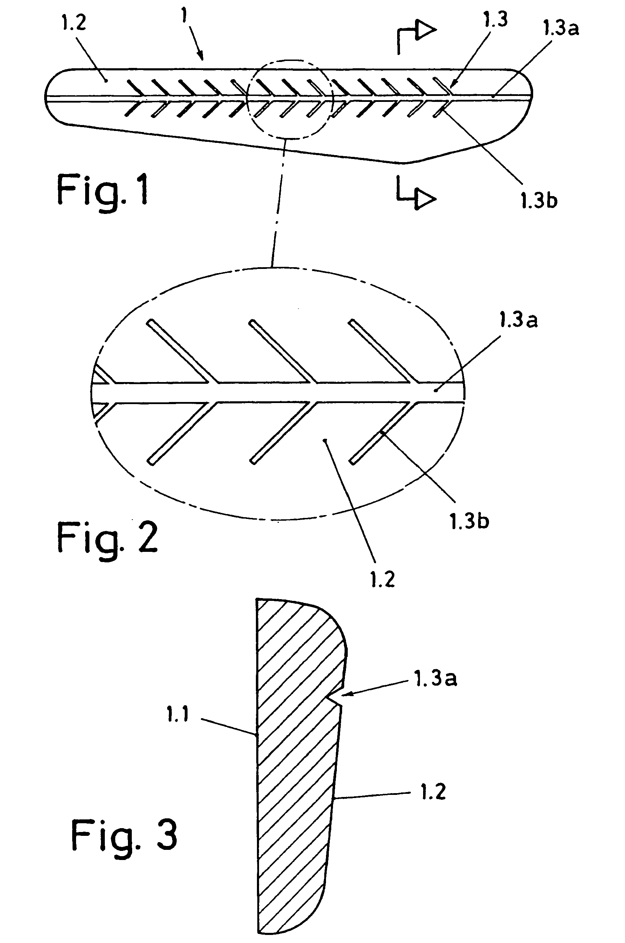

Une fois conclue la phase antérieure, le produit passe à une machine à mouler et à former, avec une phase de refroidissement, de manière à mouler le produit à une température comprise entre moins trois et moins sept degrés centigrades (-3ºC à -7ºC). De cette machine à mouler sort déjà le produit conformé avec la forme des filets (1) d'anchois, tel qu'il est représenté, à titre d'exemple non limitatif de réalisation pratique, sur la figure 1.

Le filet (1) a une face inférieure (1.1) plane et une face supérieure (1.2) inclinée où est configurée la forme de l'arête au moyen d'un renfoncement.

Comme on peut l'apprécier sur les figures 1, 2 et 3, le filet (1) a une longueur d'environ quatre-vingt-quinze millimètres ; sa partie la plus large est d'environ 18 millimètres ; sa partie la plus épaisse est d'environ 5 millimètres et sa partie la moins épaisse est d'environ 3 à 4 millimètres.

La partie centrale (1.3a) du renfoncement (1.3) configurant l'arête centrale est d'un millimètre à son début le plus large et d'une profondeur d'un millimètre ; tandis que les extensions plus petites (1.3b) naissant de la partie centrale, sont de deux ou trois dixièmes de millimètre, aussi bien en ce qui concerne leur profondeur que leur largeur dans leur partie initiale.

Ensuite, le produit déjà conformé est soumis à un traitement de pré-cuisson/gélification, dans un four de type tunnel de vapeur, à une température comprise entre quatre-vingt-cinq et quatre-vingt-dix degrés centigrades (85ºC-90ºC) pendant une durée comprise entre dix et quinze minutes, de préférence douze minutes. Le produit est ensuite traité dans une phase de refroidissement par air, en continu, jusqu'à obtenir sa stabilisation à une température de dix-huit degrés centigrades pendant une durée de dix minutes.

Ce produit est ensuite conditionné et on lui incorpore le liquide de couverture, tel que de l'huile, de la sauce ou autres, pour procéder ensuite à la fermeture du récipient.

On procède à une stérilisation à une température de régime dans le voisinage des cent vingt degrés centigrades, tels que 121ºC, pendant une durée comprise entre dix et quinze minutes, de préférence douze minutes. Ce procédé de stérilisation a une phase préalable d'élévation de température jusqu'à atteindre celle de régime, c'est à dire 121ºC, le maintient à cette température pendant douze minutes et une phase postérieure de refroidissement jusqu'à obtenir la disposition du produit stabilisé à température ambiante. La durée totale du procédé en autoclave est d'environ cinquante cinq minutes. Cette durée peut être réduite ou élargie en fonction des dimensions des récipients et, par conséquent, en fonction de la masse de produit incorporée dans lesdits récipients.

## Revendications

1. Produit alimentaire analogue à l'anchois, **caractérisé en ce qu'**il est composé de surimi-base, de pulpe d'anchois, d'eau et d'autres ingrédients, tout cela selon les pourcentages en poids suivants : celui du surimi-base entre vingt et vingt cinq pour cent et de préférence 23,00% ; celui de la pulpe d'anchois entre trente et quarante pour cent, et de préférence 35,00% ; celui de l'eau d'environ vingt pour cent, et de préférence 20,00% ; le reste, et de préférence les 22% restant étant formés par les autres ingrédients qui sont constitués par : des colorants, un concentré protéique, des fibres végétales, de l'amidon de manioc, du blanc d'oeuf en poudre, du sel, un agent texturant/gélifiant et de la fécule de pomme de terre.

2. Produit alimentaire analogue à l'anchois selon la première revendication, **caractérisé en ce que** le pourcentage en poids de colorants est, de préférence, de deux virgule quatre-vingt-quinze (2,95%), en présentant trois colorants ; deux d'entre eux organiques en poudre « rouge-fraise » et « caramel » et un troisième colorant comme liquide hydrosoluble de type « saumon ».

3. Produit alimentaire analogue à l'anchois selon la première revendication, **caractérisé en ce que** le pourcentage en poids du concentré protéique est, de préférence, celui d'un pour cent (1,00%), ce concentré protéique étant séreux, d'origine totalement laitière.

4. Produit alimentaire analogue à l'anchois, selon la première revendication, **caractérisé en ce que** le pourcentage en poids de la fibre végétale est, de préférence, celui de huit virgule soixante-quinze pour cent (8,75%), en s'agissant d'une fibre fonctionnelle composée d'amidon et de fibres alimentaires.

5. Produit alimentaire analogue à l'anchois selon la première revendication, **caractérisé en ce que** le pourcentage en poids de l'amidon de manioc est, de préférence, celui de trois pour cent (3,00%), en s'agissant d'un amidon extrait par voie humide des tubercules correspondants.

6. Produit alimentaire analogue à l'anchois selon la première revendication, **caractérisé en ce que** le blanc d'oeuf est en poudre et son pourcentage en poids est de deux pour cent (2,00%), tandis que celui du sel est de un virgule cinq pour cent (1,50%).

7. Produit alimentaire analogue à l'anchois selon la première revendication, **caractérisé en ce que** comme agent texturant/gélifiant, on utilise de la farine de graines de caroube avec une carragheen gélifiante, le pourcentage en poids de cet agent étant, de préférence, celui de zéro virgule huit pour cent (0,80%).

8. Produit alimentaire analogue à l'anchois selon la première revendication, **caractérisé en ce que** la fécule de pomme de terre est une fécule de pomme de terre modifiée et soluble à froid qui se présente en poudre et dont le pourcentage en poids est, de préférence, celui de deux pour cent (2,00%).

9. Procédé pour la fabrication du produit alimentaire de la première revendication, **caractérisé en ce que** l'on part d'un procédé de coupage et de mélange dans une machine coupeuse-mélangeuse dans laquelle on introduit le surimi-base et les autres composants, à l'exception du sel et de l'agent texturant/gélifiant (la farine de graines de caroube et la carragheen); ce procédé de coupage et de mélange a une phase lente et une autre rapide jusqu'à ce que le produit atteigne une température de 0ºC, moment auquel on ajoute le sel et l'agent texturant/gélifiant, en maintenant le procédé dans la machine coupeuse-mélangeuse en phase rapide jusqu'à obtenir une émulsion appropriée à une température de finition inférieure à 5ºC ; lors d'une phase postérieure le produit passe à une machine à mouler pourvue d'une phase de refroidissement, machine dans laquelle on moule le produit à une température comprise entre -3ºC et -7º-C ; une fois le produit conformé avec la forme des filets d'anchois on le soumet à un traitement de pré-cuisson/gélification pour ensuite le conditionner et le stériliser.

10. Procédé pour la fabrication d'un produit alimentaire selon la neuvième revendication, **caractérisé en ce que** la phase lente de la machine coupeuse-mélangeuse a lieu pendant trente secondes à une vitesse de 1500 t.p.m. et la phase rapide à 3000 t.p.m. jusqu'à ce que le produit atteigne la température de 0ºC, moment auquel on ajoute le sel et l'agent texturant/gélifiant, en maintenant la machine coupeuse/mélangeuse dans sa phase rapide de 3000 t.p.m.

11. Procédé pour la fabrication d'un produit alimentaire selon la neuvième revendication d'un produit alimentaire, **caractérisé en ce que** le traitement de pré-cuisson/gélification a lieu dans un four de type tunnel de vapeur, à une température comprise entre 85ºC et 90ºC pendant une durée comprise entre dix et quinze minutes ; de manière à ce que postérieurement, le produit est traité en continu dans une phase de refroidissement par air, jusqu'à sa stabilisation à une température de 18ºC pendant dix minutes.

12. Procédé pour la fabrication d'un produit alimentaire selon la neuvième revendication, **caractérisé en ce que** la phase de stérilisation est réalisée à une température de régime d'environ 120ºC, de préférence 121ºC, pendant une durée comprise entre dix et quinze minutes, de préférence douze minutes ; tout cela de manière à ce qu'à la fin du procédé de stérilisation, le produit se trouve stabilisé à température ambiante.

13. Procédé pour la fabrication d'un produit alimentaire selon la neuvième revendication, **caractérisé en ce que** pour l'obtention de bloc de surimi-base on part, de préférence, de l'emploi du poisson dénommé « *Prionotus stephanophrys* » en éliminant de sa pulpe les protéines sarcoplasmiques et les matières grasses, en le soumettant à trois lavages et trois séchages ; pour affiner à la suite la pulpe en éliminant les collagènes et la presser, en éliminant l'eau résiduelle, en ajoutant après des cryoprotecteurs, tels que le sucre, le sorbitol et les polyphosphates pour conformer déjà le bloc de surimi-base.

## Claims

1. Food product similar to anchovy, **characterised in that** it is composed of surimi base, anchovy pulp, water and other ingredients, all in the following percentages by weight: that of the surimi base, between twenty and twenty-five percent and preferably 23.00%; that of the anchovy pulp, between thirty and forty percent, and preferably 35.00%; that of water, approximately twenty percent, and preferably 20.00%; the remainder, and preferably the remaining 22%, being formed by the other ingredients, which are constituted by: colourings, protein concentrate, vegetable fibre, cassava starch, powdered egg white, salt, a texturising/gelling agent and potato flour.

2. Food product similar to anchovy according to the first claim, **characterised in that** the percentage by weight of colourings is preferably two point nine five (2.95%), having three colourings; two of them powdered organic colourings: "strawberry red" and "caramel" and a third colouring such as a water-soluble liquid of the "salmon" type.

3. Food product similar to anchovy according to the first claim, **characterised in that** the percentage by weight of the protein concentrate is preferably one percent (1.00%), this protein concentrate being serous, totally dairy in origin.

4. Food product similar to anchovy, according to the first claim, **characterised in that** the percentage by weight of vegetable fibre is preferably eight point seven five percent (8.75%), consisting of a functional fibre composed of starch and dietary fibre.

5. Food product similar to anchovy according to the first claim, **characterised in that** the percentage by weight of the cassava starch is preferably three percent (3.00%), consisting of a starch extracted by the wet method from the corresponding tubers.

6. Food product similar to anchovy according to the first claim, **characterised in that** the egg white is powdered and its percentage by weight is two percent (2.00%), while that of salt is of one point five percent (1.50%).

7. Food product similar to anchovy according to the first claim, **characterised in that** carob seed flour with gelling carragheen is used as a texturising/gelling agent, the percentage by weight of this agent being preferably zero point eight percent (0.80%).

8. Food product similar to anchovy according to the first claim, **characterised in that** the potato flour is a modified, cold-soluble potato flour that is in powder form, the percentage by weight of which is preferably two percent (2.00%).

9. Method for manufacturing the food product of the first claim, **characterised in that** the first process is a cutting and mixing process in a cutting-mixing machine into which the surimi base and other components are introduced, except for the salt and texturising/gelling agent (carob seed flour and carragheen); this cutting and mixing process has a slow phase and another fast one until the product reaches a temperature of 0°C, at which time the salt and texturising/gelling agent are added, keeping the process in the cutting-mixing machine in the fast phase until an appropriate emulsion is produced at a finishing temperature below 5°C; in a subsequent phase the product moves to a moulding machine provided with a cooling phase, in which machine the product is moulded at a temperature comprised between -3°C and -7°C; once the product is shaped to the shape of anchovy fillets it is subjected to precooking/gelling treatment in order to then condition it and sterilise it.

10. Method for manufacturing a food product according to the ninth claim, **characterised in that** the slow phase of the cutting-mixing machine takes place over thirty seconds at a speed of 1500 r.p.m. and the fast phase at 3000 r.p.m. until the product reaches the temperature of 0°C, at which time salt and the texturing/gelling agent are added, while keeping the cutting/mixing machine in its fast phase of 3000 r.p.m.

11. Method for manufacturing a food product according to the ninth claim for a food product, **characterised in that** the precooking/gelling treatment takes place in an oven of the steam tunnel type, at a temperature comprised between 85°C and 90°C for a period of time comprised between ten and fifteen minutes; so that, subsequently, the product is processed continuously in an air cooling phase, until it stabilises at a temperature of 18°C for ten minutes.

12. Method for manufacturing a food product according to the ninth claim, **characterised in that** the sterilisation phase takes place at an operating temperature of approximately 120°C, preferably 121°C, for a period of time comprised between ten and fifteen minutes, preferably twelve minutes; all so that, at the end of the sterilisation process, the product is stabilised at ambient temperature.

13. Method for manufacturing a food product according to the ninth claim, **characterised in that** the production of a block of surimi base preferably starts with the use of the fish called *"Prionotus stephanophrys",* by removing the sarcoplasmic proteins and fats from its pulp, by subjecting it to three washing and three drying processes; in order to refine the pulp subsequently by removing the collagens and pressing it, while eliminating residual water, subsequently adding cryoprotectants, such as sugar, sorbitol and polyphosphates in order to shape the block of surimi-base in advance.

## Patentansprüche

1. Sardellenähnliches Lebensmittelprodukt, **dadurch gekennzeichnet, dass** es aus Surimimasse, Sardellenfleisch, Wasser und weiteren Zutaten in den folgenden Gewichtsanteilen besteht: Surimimasse zwischen zwanzig und fünfundzwanzig Prozent und vorzugsweise 23,00%, Sardellenfleisch zwischen dreißig und vierzig Prozent und vorzugsweise 35,00%, Wasser ungefähr zwanzig Prozent und vorzugsweise 20,00%; wobei der Rest, vorzugsweise 22%, durch die übrigen Zutaten gebildet werden, die sich wie folgt zusammensetzen: Farbstoffe, ein Proteinkanzentrat, Pflanzenfasern; Maniokstärke, Eiweißpulver, Salz, ein Stukturfestiger/Geliermittel und Kartoffelstärke.

2. Sardellenähnliches Lebensmittelprodukt nach Anspruch 1, **dadurch gekennzeichnet, dass** der Gewichtsanteil der Farbstoffe vorzugsweise zwei Komma neun fünf Prozent (2,95%) beträgt, wobei drei Farbstoffe vorhanden sind und zwei von diesen organische Farbstoffe in Pulverform "Erdbeerrot" und "Karamell" und ein dritter Farbstoff als wasserlösliche Flüssigkeit vom Typ "Lachs" sind.

3. Sardellenähnliches Lebensmittelprodukt nach Anspruch 1, **dadurch gekennzeichnet, dass** der Gewichtsanteil des Eiweißkonzentrats vorzugsweise ein Prozent (1,00%) beträgt und dieses Eiweißkonzentrat serös ist und vollständig aus Milch stammt.

4. Sardellenähnliches Lebensmittelprodukt nach Anspruch 1, **dadurch gekennzeichnet, dass** der Gewichtsanteil der Pflanzenfasern vorzugsweise acht Komma sieben fünf Prozent (8,75%) beträgt, wobei es sich um eine funktionelle Faser bestehend aus Stärke und Lebensmittelfasern handelt.

5. Sardellenähnliches Lebensmittelprodukt nach Anspruch 1, **dadurch gekennzeichnet, dass** der Gewichtsanteil der Maniokstärke vorzugsweise drei Prozent (3,00%) beträgt, wobei es sich um durch Nassextraktion aus den entsprechenden Knollen gewonnene Stärke handelt.

6. Sardellenähnliches Lebensmittelprodukt nach Anspruch 1, **dadurch gekennzeichnet, dass** das Eiweiß Eiweißpulver ist und sein Gewichtsanteil zwei Prozent (2,00%) beträgt, während der des Salzes eins Komma fünf Prozent (1,50%) beträgt.

7. Sardellenähnliches Lebensmittelprodukt nach Anspruch 1, **dadurch gekennzeichnet, dass** als Strukturfestiger/Geliermittel Johannisbrotkemmehl mit einem gelierenden Carageen verwendet wird, wobei der Gewichtsanteil dieses Stoffes vorzugsweise null Komma acht Prozent (0,80%) beträgt.

8. Sardellenähnliches Lebensmittelprodukt nach Anspruch 1, **dadurch gekennzeichnet, dass** die Kartoffelstärke eine modifizierte und kalt lösliche Kartoffelstärke ist, die als Pulver vorliegt und deren Gewichtsanteil vorzugsweise zwei Prozent (2,00%) beträgt.

9. Verfahren zur Herstellung des Lebensmittelprodukts nach Anspruch 1, **dadurch gekennzeichnet, dass** von einem Verfahren zum Zerkleinern und Mischen in einer Zerkleinerungs- und Mischmaschine ausgegangen wird, der die Surimimasse und die übrigen Zutaten, mit Ausnahme des Salzes und des Strukturfestigers/Geliermittels (Johannisbrotkernmehl und Carageen), zugeführt werden; wobei dieses Zerkleinerungs- und Mischverfahren eine langsame und eine schnelle Phase aufweist, bis das Produkt eine Temperatur von 0°C erreicht, in diesem Moment das Salz und der Strukturfestiger/das Geliermittel hinzugefügt werden und das Verfahren in der Zerkleinerungs- und Mischmaschine in der schnellen Phase gehalten wird, bis eine geeignete Emulsion mit einer Endverarbeitungstemperatur von unter 5°C erhalten wird; in einer späteren Phase wird das Produkt einer Formmaschine zugeführt, die mit einer Kühlphase versehen ist, wobei das Produkt in dieser Maschine bei einer Temperatur zwischen -3°C und -7°C geformt wird; nachdem das Produkt in die Form von Sardellenfilets gebracht wurde, wird es einer Vorkoch-/Gelierbehandlung unterzogen, um es anschließend zu konditionieren und zu sterilisieren.

10. Verfahren zur Herstellung eines Lebensmittelprodukts nach Anspruch 9, **dadurch gekennzeichnet, dass** die langsame Phase der Zerkleinerungs- und Mischmaschine für dreißig Sekunden bei einer Geschwindigkeit von 1500 U./min. und die schnelle Phase bei 3000 U./min. stattfindet, bis das Produkt eine Temperatur von 0°C erreicht, wobei in diesem Moment das Salz und der Strukturfestiger/Geliermittel hinzugefügt werden und die Zerkleinerungs- und Mischmaschine in ihrer schnellen Phase bei 3000 U./min. gehalten wird.

11. Verfahren zur Herstellung eines Lebensmittelprodukts nach Anspruch 9, **dadurch gekennzeichnet, dass** die Vorkoch-/Gelierbehandlung in einem Ofen vom Typ Dampftunnel bei einer Temperatur zwischen 85°C und 90°C während einer Dauer zwischen zehn und fünfzehn Minuten stattfindet; sodass das Produkt anschließend kontinuierlich in einer Luftkühlungsphase, bis zu seiner Stabilisierung bei einer Temperatur von 18°C für zehn Minuten, behandelt wird.

12. Verfahren zur Herstellung eines Lebensmittelprodukts nach Anspruch 9, **dadurch gekennzeichnet, dass** die Sterilisationsphase bei einer Betriebstemperatur von ungefähr 120°C, vorzugsweise 121°C, für eine Dauer zwischen zehn und fünfzehn Minuten, vorzugsweise zwölf Minuten, durchgeführt wird; sodass das Produkt am Ende des Sterilisationsverfahrens bei Umgebungstemperatur stabilisiert ist.

13. Verfahren zur Herstellung eines Lebensmittelprodukts nach Anspruch 9, **dadurch gekennzeichnet, dass** für das Erhalten von Surimimasseblöcken vorzugsweise von der Verwendung des Fisches "*Prionatus stephanophrys*" ausgegangen wird, wobei die sarkoplasmatischen Proteine und die Fette aus seinem Fleisch entfernt werden, indem er drei Wasch- und drei Trockungsvorgängen unterzogen wird; um das Fleisch anschließend durch Entfernen der Collagene zu verfeinern und es zu pressen, wobei das Restwasser entfernt und anschließend Kryoprotektoren, wie etwa Zucker, Sorbitol und Polyphosphare, hinzugefügt werden, um nun den Surimimasseblock zu formen.
